# DEMANDE DE BREVET EUROPEEN

(11) **EP 4 106 153 A1**
(43) Date de publication de la demande: **21.12.2022**
(21) Numéro de dépôt: 22178931.6
(22) Date de dépôt: 14.06.2022
(51) Int. Cl.: H02K 3/38, H02K 9/06

(54) **SÉPARATEUR DE PHASE POUR STATOR DE MACHINE ÉLECTRIQUE TOURNANTE**

(30) Priorité: 18.06.2021 FR 2106502
(71) Demandeur: Moteurs Leroy-Somer, 16915 Angouleme (FR)
(72) Inventeur: BOIRLAUD, Matthieu, Saint Yrieix sur Charente (FR); BROUSSARD, Franck, Ruelle sur Touvre (FR); DANIAU, François-Xavier, Blanzaguet St Cybard (FR); FERRANE, Vincent, Angoulême (FR)
(74) Mandataire: Nony

(57) **Abrégé**

Séparateur (20) pour stator (10) de machine électrique tournante (1), comportant une pluralité de barreaux (21) s'étendant parallèlement les uns aux autres, et reliés à leurs extrémités, des ouvertures oblongues (22) étant ménagées entre deux barreaux (21) consécutifs.

## Description

### Domaine Technique

La présente invention concerne le domaine des machines électriques tournantes, et notamment les stators de telles machines, plus particulièrement des machines électriques tournantes dites ouvertes, c'est-à-dire avec une circulation de fluide, en particulier de gaz, par exemple de l'air, entre l'intérieur de la machine, le long du stator, et l'extérieur.

Il peut notamment s'agir de générateurs électriques ou de moteurs électriques. Cette circulation de fluide permet le refroidissement de la machine, et en particulier des parties actives de la machine, notamment du bobinage du stator.

### Technique antérieure

Le refroidissement du stator d'une machine électrique tournante peut s'effectuer principalement par l'augmentation de la surface d'échange avec un fluide de refroidissement.

L'augmentation de la surface d'échange avec l'air du stator permet d'améliorer les performances thermiques des machines électriques. On pourra citer par exemple les brevets US 1882487 ou encore US 2818515, et plus récemment US 4912350, WO 2005/022718 ou encore US 8427018B2.

Dans ces machines, on crée des canaux de circulation d'air ou des ailettes à la périphérie du stator, en utilisant les tôles magnétiques du stator pour former les canaux ou les ailettes. On utilise-la partie active magnétique naturellement présente dans les coins du carré de tôle.

DE 102017011719 a pour objet une machine comportant des passages pour la circulation d'un liquide de refroidissement dans des pièce rapportées en contact avec les têtes de bobine du stator, dans lesquelles le liquide circule.

Dans US 2010072863, le stator comporte des écarteurs pour créer des passages pour un fluide de refroidissement, mis en circulation par une pompe et apporté près des bobines par des buses se trouvant dans la carcasse.

DE 2037829 a pour objet des plaques de refroidissements insérées dans les têtes de bobine statoriques. Ces plaques présentent à leur extrémité des ailettes qui pénalisent l'écoulement d'air et entrainent localement une perte de charge qui risque de faire diminuer le débit servant au refroidissement du stator.

WO 2013135768 porte sur une machine électrique comportant des séparateurs de phase disposés entre les différentes phases des têtes de bobine statoriques. Chaque séparateur de phase comporte deux parties opposées pleines en contact avec le bobinage.

DE 102010003686 a pour objet une machine comportant des éléments de refroidissement sous forme de séparateurs de phase.

WO 2015011492 a pour objet un séparateur pour séparer électriquement des groupes d'enroulements d'extrémité de différentes phases dans le stator d'une machine électrique tournante. Ce séparateur comporte des canaux de refroidissement s'étendant suivant une direction circonférentielle et des renforts perpendiculaires aux canaux de refroidissement. Ces renforts de matière isolante sont susceptibles de gêner l'écoulement d'air et de ce fait de pénaliser les transferts de chaleur.

EP 1 865 588 divulgue un séparateur pour fournir une couche électriquement isolante entre des groupes d'enroulements à différents potentiels électriques dans un appareil électrique, le séparateur comprenant une matrice de tiges interconnectées.

Il existe un besoin pour améliorer encore le refroidissement du stator des machines électrique tournantes, et d'augmenter la surface d'échange avec un fluide de refroidissement, tout particulièrement avec le bobinage du stator et notamment les têtes de bobine statorique.

### Résumé de l'invention

L'invention vise à répondre à ce besoin et a ainsi pour objet, selon l'un de ses aspects, un séparateur pour stator de machine électrique tournante, comportant une pluralité de barreaux s'étendant parallèlement les uns aux autres, et reliés à leurs extrémités, des ouvertures oblongues étant ménagées entre deux barreaux consécutifs.

Le séparateur selon l'invention est configuré pour être disposé dans un bobinage d'un stator de machine électrique tournante, notamment entre des conducteurs électriques du bobinage.

Le séparateur permet d'améliorer le refroidissement du bobinage du stator, en permettant d'améliorer l'écoulement de l'air dans les têtes de bobines, ce qui favorise les échanges de chaleur et permet d'abaisser la température dans ces têtes de bobines. La diminution de températures aux extrémités du bobinage peut également permettre d'abaisser la température moyenne du bobinage du stator.

Grâce à l'invention, on utilise également les échanges thermiques avec le bobinage du stator, en particulier les têtes de bobines, pour améliorer le refroidissement du stator.

Le séparateur permet en effet d'écarter les conducteurs électriques du bobinage, et notamment dans les têtes de bobines, et ainsi d'augmenter la surface d'échange entre les conducteurs électriques et le fluide de refroidissement, notamment l'air.

En particulier, le séparateur peut permettre de favoriser une aération entre les phases du bobinage du stator.

En outre, le séparateur selon l'invention permet d'éviter, une fois inséré dans le stator, de recouvrir le bobinage, notamment les têtes de bobines, et donc de diminuer les échanges thermiques.

L'écoulement de fluide peut être provoqué par l'élévation de pression créée par la rotation d'une turbine ou d'un ventilateur fixé sur un arbre de la machine.

Le séparateur selon l'invention est particulièrement avantageux en termes de quantité de matériau nécessaire et de simplicité de forme.

Il permet de minimiser les pertes de charge à la circulation du fluide de refroidissement, notamment de l'air.

Les barreaux se raccordent entre eux par leurs extrémités longitudinales. Le fait que les barreaux se raccordent entre eux par leurs extrémités longitudinales permet de minimiser les zones de contact entre les têtes de bobine du stator et par conséquent présente un meilleur potentiel de gain en terme du refroidissement.

Dans un mode de réalisation, les barreaux se raccordent entre eux uniquement par leurs extrémités longitudinales.

Le séparateur peut comporter une alternance d'ouvertures et de barreaux.

La présence des barreaux permet d'obtenir des caractéristiques de tenue mécanique satisfaisante pour le séparateur selon l'invention.

La présence des ouvertures permet de favoriser la circulation de l'air.

### Exposé de l'invention

Le séparateur peut notamment comporter entre 2 et 100 barreaux, mieux entre 4 et 80, voire entre 7 et 60, voire encore entre 10 et 40 barreaux. Le séparateur peut par exemple comporter 21 barreaux, dont 19 barreaux disposés entre deux ouvertures consécutives et deux barreaux d'extrémité.

Le séparateur peut notamment comporter entre 2 et 100 ouvertures, mieux entre 4 et 80, voire entre 7 et 60, voire encore entre 10 et 40 ouvertures. Le séparateur peut par exemple comporter 20 ouvertures.

Toutes les ouvertures peuvent être oblongues et s'étendre chacune selon un axe d'élongation. Tous les axes d'élongation des ouvertures peuvent s'étendre parallèlement les uns aux autres.

Par « oblongue », il faut comprendre que les ouvertures sont allongées et ont une dimension plus grande suivant une direction d'élongation principale.

Dans un mode de réalisation, la dimension la plus grande des ouvertures oblongues est au moins deux fois, de préférence au moins cinq fois, encore de préférence au moins dix fois, plus grande qu'une autre dimension des ouvertures oblongues.

Les ouvertures peuvent représenter au moins 30 % de la surface totale du séparateur, mieux au moins 40 %, voire au moins 50 % de la surface totale du séparateur, mieux au moins 60%, voire au moins 70%. Elles peuvent par exemple représenter au moins 80 % de la surface totale du séparateur, mieux au moins 95 %, voire au moins 99 % de la surface totale du séparateur.

Le séparateur peut comporter deux parties de liaison circonférentielles, les barreaux se raccordant à leurs extrémités longitudinales auxdites parties de liaisons circonférentielles. Les parties de liaison circonférentielles relient les barreaux entre eux, et peuvent définir des bords axialement supérieur et inférieur du séparateur.

Les barreaux peuvent s'étendre chacun selon un axe d'élongation. Tous les axes d'élongation des barreaux peuvent s'étendre parallèlement les uns aux autres.

Dans un mode de réalisation, le séparateur ne comporte pas de barreaux s'étendant dans une direction transversale aux axes d'élongation des barreaux reliées entre eux par les parties de liaison circonférentielles. Le séparateur peut comporter notamment une seule rangée d'ouverture entre les parties de liaison circonférentielles. Notamment, les ouvertures s'étendent d'un bout à l'autre entre les parties de liaison circonférentielles.

Les barreaux peuvent être en section transversale de forme générale oblongue, s'étendant selon un grand axe perpendiculaire à une surface directrice du séparateur. La section transversale est perpendiculaire à l'axe d'élongation du barreau. Une surface directrice du séparateur est une surface contenant tous les axes d'élongation des ouvertures. La surface directrice peut également comporter tous les axes d'élongation des barreaux.

Une surface directrice du séparateur peut être courbée autour d'un axe de courbure parallèle aux axes d'élongation des ouvertures et/ou des barreaux. La surface directrice du séparateur peut ainsi être non plane, étant légèrement courbée autour d'un axe de courbure parallèle aux axes d'élongation des ouvertures et/ou des barreaux.

L'homme du métier comprend que dans la présente invention, lorsque le séparateur est réalisé par moulage, cette courbure de la surface directrice est venue de moulage. Cette courbure est présente dans le séparateur avant l'insertion de celui-ci dans le bobinage du stator.

La courbure du séparateur peut permettre de faciliter son insertion dans le bobinage du stator, et notamment dans les têtes de bobines de celui-ci. Sa courbure peut notamment correspondre à la courbure du stator dans lequel il est destiné à être inséré.

Le séparateur peut avoir une étendue circonférentielle supérieure à au moins 30°, mieux supérieure à au moins 40°, voire supérieure à 45°, étant par exemple de l'ordre de 60°. L'étendue circonférentielle du séparateur peut atteindre par exemple 360° dans le cas d'une seule pièce continue.

Une étendue circonférentielle suffisamment importante peut permettre de maintenir un écart entre les phases du bobinage du stator sur une plus grande distance circonférentielle, et ainsi d'améliorer le refroidissement.

Le séparateur peut avoir une étendue circonférentielle supérieure à 1,5 fois l'étendue circonférentielle d'une phase du bobinage du stator, voire supérieure à 2 fois, pouvant aller jusqu'à 3 fois l'étendue circonférentielle d'une phase du bobinage du stator.

En outre, cette étendue circonférentielle permet d'améliorer l'écartement entre les phases du bobinage du stator, et notamment d'obtenir un écartement constant dans les têtes de bobines du stator, avec une bonne hauteur de passage d'air.

La hauteur du séparateur, mesurée perpendiculairement à son axe de courbure, peut être notamment comprise entre 30 et 300 mm, mieux entre 50 et 200 mm, étant par exemple de l'ordre de 120 mm.

En fonction du choix de la hauteur du séparateur, on peut contrôler la quantité d'air frais circulant à l'intérieur des têtes de bobines ainsi que les dimensions globales des têtes de bobines.

L'épaisseur du séparateur, mesurée perpendiculairement à son axe de courbure, peut être notamment comprise entre 5 et 50 mm, mieux entre 10 et 25 mm, étant par exemple de l'ordre de 15 mm.

La longueur du séparateur, mesurée selon son axe de courbure, peut être notamment comprise entre 100 mm et 500 mm, mieux entre 200 et 400 mm, étant par exemple de l'ordre de 300 mm.

Le séparateur peut avoir une épaisseur qui est plus petite que sa hauteur.

Le séparateur selon l'invention peut dans un mode de réalisation être d'un seul tenant. Il peut par exemple être réalisé par moulage. Compte tenu de la forme très simple du séparateur, le moulage est aisé et facilité.

Le séparateur peut être réalisé au moins partiellement dans un matériau isolant électrique, voire entièrement réalisé dans un matériau isolant électrique. Le matériau isolant électrique peut par exemple être choisi dans la liste suivante, qui n'est pas limitative : PA66, PA6, Nylon.

### Stator

L'invention a encore pour objet, selon un autre de ses aspects, indépendamment ou en combinaison avec ce qui précède, un stator de machine électrique tournante comportant au moins un séparateur tel que décrit plus haut.

Le stator peut comporter une culasse, notamment formée d'un empilement de tôles statoriques. Les tôles statoriques sont de préférence magnétiques.

Le stator peut comporter un bobinage, lequel peut être disposé sur des dents de l'empilement de tôles statoriques. Le bobinage peut comporter des bobines, chaque bobine étant disposée sur une dent, le bobinage étant alors dit « concentré ». En variante, les bobines peuvent entourer plusieurs dents consécutives, le bobinage étant alors dit « distribué ». En variante encore, le bobinage peut comporter des épingles en U ou en I.

Le bobinage peut avoir des parties d'extrémité dépassant de la culasse du stator qui sont appelées 'têtes de bobines'.

Le ou les séparateurs peuvent être insérés dans le bobinage du stator, et notamment entre des conducteurs électriques du stator.

Le ou les séparateurs peuvent être insérés de manière à ce que les barreaux de chaque séparateur s'étendent sensiblement parallèlement à un axe longitudinal du stator.

Le stator peut notamment comporter à l'une de ses extrémités libres entre un et douze séparateurs, notamment entre trois et dix, voire entre quatre et huit séparateurs. Il peut en comporter autant à chacune de ses extrémités libres.

Les séparateurs du stator peuvent être tous identiques entre eux.

Les séparateurs peuvent être fixés au stator, notamment aux têtes de bobines du stator, par tout moyen. L'assemblage des séparateurs aux têtes de bobines se fait par exemple avec de la frette, et/ou au moyen de colliers de fixation. Les têtes de bobines peuvent en particulier être ficelées avec de la frette et/ou des colliers de fixation.

Le refroidissement du stator, et notamment des têtes de bobines est amélioré. On peut grâce à l'invention abaisser la température dans les têtes de bobines du stator, et la température moyenne du stator. On améliore ainsi l'efficacité du refroidissement, et donc la puissance massique de la machine.

Les ouvertures entre les barreaux permettent de faire entrer de l'air à l'intérieur têtes de bobines avec une vitesse suffisamment importante pour que l'échange par convection puisse faire chuter les températures moyenne et maximale du bobinage de façon non négligeable.

Cela permet également d'améliorer la fiabilité et la durée de vie de la machine en abaissant la température maximale du bobinage dans les têtes de bobine. L'efficacité de refroidissement du stator peut être amélioré de l'ordre de 20%.

Le stator peut comporter un bobinage multiphasé, par exemple avec un nombre de phase compris entre 2 et 6, étant par exemple de 3 phases.

Le stator peut comporter au moins un séparateur disposé entre les conducteurs électriques de deux phases différentes du stator. Le séparateur permet d'améliorer l'isolation électrique des deux phases l'une par rapport à l'autre.

Le stator peut être dépourvu d'isolant entre phases, en dehors du séparateur mentionné. Le stator peut notamment être dépourvu d'isolant papier qui représente une barrière thermique. Le séparateur peut être suffisant pour obtenir une isolation satisfaisante entre les phases du stator.

En permettant d'éviter la présence d'un isolant entre les phases des têtes de bobine du stator, l'invention rend aussi l'insertion du bobinage plus aisée.

Dans un mode de réalisation, le stator peut comporter un séparateur entre toutes les deux phases consécutives des têtes de bobine du stator.

Le stator peut comporter au moins un séparateur à une première extrémité axiale du stator et/ou au moins un séparateur à une deuxième extrémité axiale du stator, opposée à la première.

Le stator peut comporter un ou une pluralité de séparateurs à une première extrémité axiale du stator. Le stator peut comporter un ou une pluralité de séparateurs à une deuxième extrémité axiale du stator.

Le stator peut ne comporter un ou une pluralité de séparateurs qu'à l'une de sa première extrémité axiale ou de sa deuxième extrémité axiale.

En variante, il peut comporter un ou des séparateurs à chacune de ses deux extrémités axiales.

Le stator peut comporter une pluralité de séparateurs disposés circonférentiellement les uns à la suite des autres. Ainsi, on peut obtenir une épaisseur aussi constante que possible du passage d'air tout autour de l'axe longitudinal du stator.

Les séparateurs peuvent être empilés axialement les uns au-dessus des autres, afin d'augmenter la hauteur totale du passage d'air dans les têtes de bobines.

Le séparateur peut être disposé de telle sorte que la circulation du fluide de refroidissement dans le stator est orientée axialement.

Ainsi, l'orientation de la circulation du fluide dans le stator est principalement parallèle à un axe longitudinal de la machine. Elle n'est notamment pas principalement radiale.

Le stator peut comporter au moins un séparateur comportant des ouvertures oblongues, ayant chacune un grand axe orienté selon un axe d'élongation parallèle à un axe longitudinal de la machine. Les ouvertures du séparateur ne sont en particulier pas orientées circonférentiellement. Les ouvertures du séparateur ne sont en particulier pas orientées radialement.

En outre, le séparateur peut comporter des barreaux également orientés parallèlement à un axe longitudinal de la machine. Le séparateur peut être dépourvu de barreaux ménagés entre deux ouvertures et perpendiculaire à un axe longitudinal de la machine.

La culasse du stator peut comporter au moins un conduit de refroidissement et/ou des ailettes de refroidissement ménagés à la périphérie de la culasse.

### Machine électrique tournante

L'invention a encore pour objet, selon un autre de ses aspects, indépendamment ou en combinaison avec ce qui précède, une machine électrique tournante, comportant un stator tel que décrit précédemment. La machine peut comporter en outre un rotor.

Grâce à l'invention, il est possible d'optimiser le refroidissement de la machine électrique tout en limitant les pertes de charge et les coûts de fabrication.

La machine électrique peut être un moteur ou un générateur.

Le stator peut être droit, étant non vrillé. En variante, le stator peut être vrillé.

Le rotor peut être à aimants permanents, disposés en surface d'une masse rotorique ou insérer circonférentiellement ou radialement dans celle-ci, ou étant disposés en U, en V ou en W, en une ou plusieurs couches.

En variante, le rotor peut être bobiné, ou en variante encore il peut être à cage d'écureuil.

La machine peut comporter un axe de rotation, qui peut être confondu avec l'axe longitudinal du stator.

La machine peut comporter un ventilateur entraîné par le rotor. Le ventilateur peut notamment être disposé sur un arbre du rotor.

La machine peut comporter un unique ventilateur, disposé d'un côté de la machine. Dans la machine peut ainsi circuler un flux de fluide de refroidissement, par exemple de gaz, notamment de l'air. Le fluide de refroidissement peut circuler d'un côté vers l'autre, dans un seul sens. Ce flux est créé par une élévation de pression d'un côté de la machine, puis traverse le stator, passant en particulier dans le ou les séparateurs susmentionnés.

En variante, la machine peut comporter deux ventilateurs, un à chacune des extrémités de la machine.

La machine peut comporter une carcasse dans laquelle le stator est inséré. Dans un mode de réalisation, la carcasse est dépourvue d'ouverture d'alimentation en fluide de refroidissement, notamment au niveau des têtes de bobine du stator.

Le stator peut être fixé dans la carcasse par frettage de la surface circonférentielle formée par des conduits de refroidissement ménagés à la périphérie de la culasse du stator. On peut utiliser un frettage à chaud, afin d'améliorer le serrage radial et avoir une meilleure tenue mécanique du stator avec la carcasse.

La machine n'est pas limitée à une gamme de tension ou à un type de bobinage, ni à une gamme de puissance ou à une gamme de vitesse.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] La figure 1 est une vue en coupe longitudinale, schématique et partielle, d'une machine électrique selon l'invention.
[Fig 2] La figure 2 est une vue en perspective, schématique et partielle, du stator de la figure 1.
[Fig 3] La figure 3 est une vue de face, schématique et partielle, d'un séparateur conforme à l'invention.
[Fig 4] La figure 4 en est une vue en perspective.
[Fig 5] La figure 5 en est une vue selon une autre perspective.
[Fig 6] La figure 6 illustre le montage du séparateur dans le stator.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites. Sur les figures, les proportions réelles n'ont pas toujours été respectées, dans un souci de clarté.

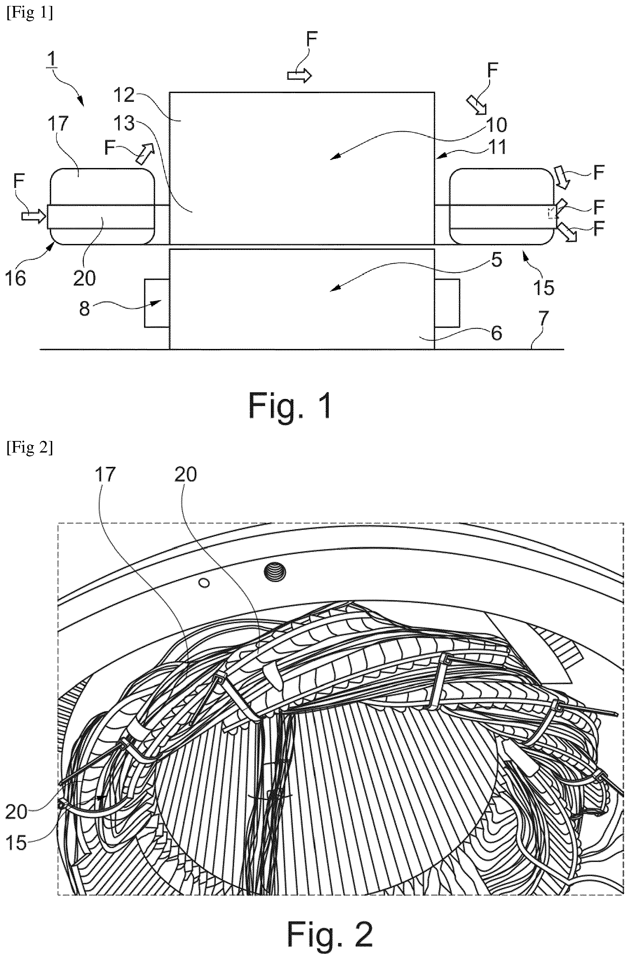

On a illustré à la figure 1 une machine électrique tournante 1 comportant un rotor 5 et un stator 10. Le rotor 5 comporte une masse rotorique 6 formée d'un paquet de tôles magnétiques montées sur un arbre 7 qui tourne autour d'un axe de rotation X de la machine 1. La masse rotorique 6 est par exemple bobinée avec un bobinage rotorique 8.

La machine 1 comporte également un ventilateur non visible sur la figure, de façon que de l'air circule d'un côté vers l'autre de la machine, dans un seul sens, selon les flèches F.

Le stator 10 est inséré dans une carcasse non visible sur la figure.

Le stator 10 comporte une masse statorique 11 formée d'un empilement de tôles magnétiques, s'étendant selon un axe longitudinal X confondu avec l'axe de rotation X de la machine.

La masse statorique 11 comporte une culasse 12 et des dents 13 formées dans l'empilement de tôles magnétiques et permettant de recevoir un bobinage 15.

Le stator 13 comporte ainsi un bobinage 15 comportant des bobines 16 formées chacune de conducteurs électriques enroulés autour des dents 13.

Chaque bobine 16 comporte des parties parallèles à l'axe de rotation X de la machine, insérées dans des encoches de la masse statorique, encore appelées "parties droites", et des têtes de bobines 17 dépassant de la masse statorique 11. Par «têtes de bobines » il faut comprendre les parties du bobinage du stator qui s'étendent hors de la masse statorique du stator, notamment les parties des bobines qui vont d'une encoche de la masse statorique à une autre.

Dans une machine à bobinage multiphasé, comme illustré à la figure 2, les bobines 16 comporte des groupes de bobines séparées définissant chacun une phase du bobinage statorique 15, les groupes étant situés l'un à côté de l'autre, ces différentes phases étant sous des tensions différentes durant le fonctionnement de la machine.

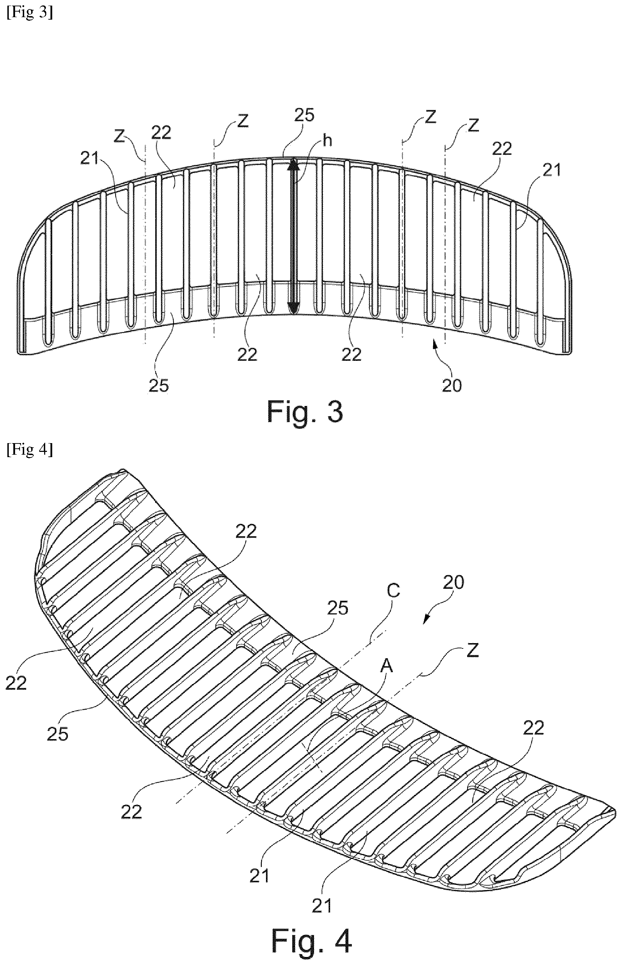

Conformément à l'invention, le stator 10 comporte des séparateurs 20 disposés entre les conducteurs électriques de deux phases différentes du stator, entre les têtes de bobines 17. Un tel séparateur 20 est illustré isolément aux figures 3 à 5.

Le séparateur est disposé de telle sorte que la circulation du fluide de refroidissement dans le stator est orientée axialement, comme illustré par les flèches F sur la figure 1. Ainsi, l'orientation de la circulation du fluide dans le stator est principalement parallèle à un axe longitudinal de la machine.

Le séparateur 20 comporte une pluralité de barreaux 21 s'étendant parallèlement les uns aux autres, et reliés à leurs extrémités, des ouvertures oblongues 22 étant ménagées entre deux barreaux consécutifs 21.

Le séparateur permet d'améliorer le refroidissement du bobinage 15 du stator, en permettant d'améliorer l'écoulement de l'air dans les têtes de bobines 17, ce qui favorise les échanges de chaleur et permet d'abaisser la température dans ces têtes de bobines 17. Le séparateur permet en effet d'écarter les conducteurs électriques du bobinage 15, et notamment dans les têtes de bobines 17, et ainsi d'augmenter la surface d'échange entre les conducteurs électriques et l'air.

Le séparateur 20 comporte une alternance d'ouvertures 22 et de barreaux 21.

Le séparateur 20 comporte dans l'exemple décrit 21 barreaux, dont 19 barreaux disposés entre deux ouvertures consécutives et deux barreaux d'extrémité. En outre, le séparateur comporte ici 20 ouvertures.

Toutes les ouvertures 22 sont oblongues et s'étendent chacune selon un axe d'élongation Z. Tous les axes d'élongation Z des ouvertures s'étendent parallèlement les uns aux autres, comme visible sur la figure 3.

Les ouvertures représentent environ 60 % de la surface totale du séparateur.

Les barreaux 21 se raccordent entre eux par leurs extrémités longitudinales. Le séparateur comporte à cet effet deux parties de liaison circonférentielles 25, les barreaux 21 se raccordant à leurs extrémités longitudinales auxdites parties de liaisons circonférentielles 25.

Les barreaux 21 s'étendent chacun selon un axe d'élongation Z. Tous les axes d'élongation Z des barreaux s'étendent parallèlement les uns aux autres.

Dans l'exemple décrit, les axes d'élongation des barreaux 21 s'étendent parallèlement aux axes d'élongation des ouvertures 22. Tous ces axes d'élongation Z sont parallèle à l'axe de rotation X de la machine.

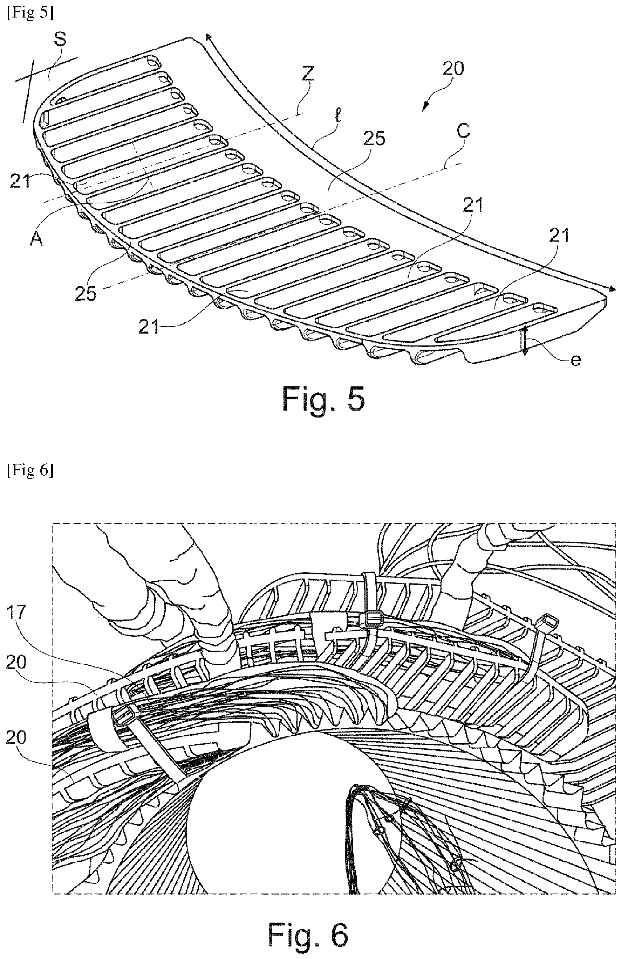

En outre, les barreaux 21 sont en section transversale de forme générale oblongue, s'étendant selon un grand axe A perpendiculaire à une surface directrice S du séparateur, comme visible sur les figures 4 et 5. La section transversale est perpendiculaire à l'axe d'élongation Z du barreau. Pour un barreau donné, le grand axe A est perpendiculaire à l'axe d'élongation Z.

La surface directrice S du séparateur 20 est la surface contenant tous les axes d'élongation Z des ouvertures 22 et des barreaux. La surface directrice S du séparateur est non plane, étant légèrement courbée autour d'un axe de courbure C parallèle aux axes d'élongation Z des ouvertures et des barreaux 21. La courbure du séparateur peut permettre de faciliter son insertion dans le bobinage du stator, et notamment dans les têtes de bobines de celui-ci, comme illustré à la figure 6. Sa courbure peut notamment correspondre à la courbure du stator dans lequel il est destiné à être inséré.

Dans l'exemple décrit, le séparateur 20 a une étendue circonférentielle de l'ordre de 60°. Cette étendue circonférentielle permet d'améliorer l'écartement entre les phases du bobinage du stator, et notamment d'obtenir un écartement constant dans les têtes de bobines du stator, avec une bonne hauteur de passage d'air.

La hauteur h du séparateur, mesurée perpendiculairement à son axe de courbure, est par exemple de l'ordre de 120 mm.

L'épaisseur e du séparateur, mesurée perpendiculairement à son axe de courbure, est par exemple de l'ordre de 15 mm. Par exemple, l'épaisseur e du séparateur est constante lorsqu'elle mesurée selon les grands axes A des barreaux.

La longueur l du séparateur, mesurée selon son axe de courbure, peut être est par exemple de l'ordre de 300 mm.

Le séparateur a une épaisseur qui est plus petite que sa hauteur.

Le séparateur est d'un seul tenant, étant réalisé par moulage dans un matériau isolant électrique.

Dans l'exemple décrit, le stator comporte à l'une de ses extrémités libres douze séparateurs. Il peut en comporter autant à l'autre de ses extrémités libres. Le stator comporte ainsi un séparateur entre toutes les deux phases consécutives des têtes de bobine du stator.

Les séparateurs 20 du stator sont tous identiques entre eux.

Dans le mode de réalisation de la figure 6, les séparateurs 20 sont fixés aux têtes de bobines du stator avec de la frette, et au moyen de colliers de fixation. Les têtes de bobines sont en particulier ficelées avec de la frette et des colliers de fixation.

Du fait de la présence des séparateurs 20, le stator peut être dépourvu d'isolant entre phases, en dehors des séparateurs mentionnés.

L'invention n'est pas limitée aux exemples qui viennent d'être décrits.

En particulier, la carcasse peut avoir une forme autre que circulaire, par exemple hexagonale ou octogonale.

Dans une variante de réalisation non illustrée, le stator peut comporter une culasse comportant un ou des conduits de refroidissement et/ou des ailettes de refroidissement ménagés à la périphérie de la culasse.

## Revendications

1. Séparateur (20) pour stator (10) de machine électrique tournante (1), comportant une pluralité de barreaux (21) s'étendant parallèlement les uns aux autres, et reliés à leurs extrémités, des ouvertures oblongues (22) étant ménagées entre deux barreaux (21) consécutifs, une surface directrice (S) du séparateur étant courbée autour d'un axe de courbure (C) parallèle aux axes d'élongation des ouvertures (22) et/ou des barreaux (21).

2. Séparateur selon la revendication précédente, les ouvertures (22) représentant au moins 30 % de la surface totale du séparateur, mieux au moins 40 %, voire au moins 50 % de la surface totale du séparateur.

3. Séparateur selon l'une quelconque des revendications précédentes, comportant deux parties de liaison circonférentielles (25), les barreaux (21) se raccordant à leurs extrémités longitudinales auxdites parties de liaisons circonférentielles (25), les parties de liaison circonférentielles définissant notamment des bords axialement supérieur et inférieur du séparateur.

4. Séparateur selon l'une quelconque des revendications précédentes, comportant une seule rangée d'ouverture entre les parties de liaison circonférentielles.

5. Séparateur selon l'une quelconque des revendications précédentes, les barreaux (21) étant en section transversale de forme générale oblongue, s'étendant selon un grand axe (A) perpendiculaire à une surface directrice (S) du séparateur.

6. Séparateur selon l'une quelconque des revendications précédentes, le séparateur étant d'un seul tenant réalisé par moulage.

7. Séparateur selon l'une quelconque des revendications précédentes, ayant une étendue circonférentielle supérieure à au moins 30°, mieux supérieure à au moins 40°, voire supérieure à 45°.

8. Séparateur selon l'une quelconque des revendications précédentes, étant réalisé au moins partiellement dans un matériau isolant électrique, voire entièrement réalisé dans un matériau isolant électrique.

9. Stator (10) de machine électrique tournante comportant au moins un séparateur (20) selon l'une quelconque des revendications précédentes.

10. Stator selon la revendication précédente, comportant au moins un séparateur (20) disposé entre les conducteurs électriques de deux phases différentes du stator.

11. Stator selon l'une des deux revendications précédentes, comportant au moins un séparateur (20) à une première extrémité axiale du stator et/ou au moins un séparateur à une deuxième extrémité axiale du stator, opposée à la première.

12. Stator selon l'une des trois revendications précédentes, comportant une culasse (12) et au moins un conduit de refroidissement et/ou des ailettes de refroidissement ménagés à la périphérie de la culasse (12).

13. Machine (1) électrique tournante, comportant un stator (10) selon l'une quelconque des revendications 8 à 11 et un rotor (5).

14. Machine selon la revendication précédente, comportant un ventilateur entraîné par le rotor (5).

15. Machine selon l'une quelconque des deux revendications précédentes, comportant une carcasse dans laquelle le stator (10) est inséré.
